Europäisches Patentamt

European Patent Office

Office européen des brevets

(11) Publication number: 0 515 764 A2

# EUROPEAN PATENT APPLICATION

(21) Application number: 91500140.8

(22) Date of filing: 11.12.91

(51) Int. Cl.⁵: **A23B 7/158**, A23B 7/152

(30) Priority: 31.05.91 ES 9101318

(43) Date of publication of application:
02.12.92 Bulletin 92/49

(84) Designated Contracting States:
AT BE DE DK ES FR GB GR IT LU NL

(71) Applicant: **Fernandez Montreal, Juan José**
**Paseo de la Estaçion, 1, Alcala de Henares**
**28807**
**E-28807 Madrid(ES)**
Applicant: **De Sande Moreno, Alfonso**
**Paseo de la Estaçion, 1, Alcala de Henares**
**28807**
**E-28807 Madrid(ES)**

(72) Inventor: **Fernandez Montreal, Juan José**
**Paseo de la Estaçion, 1, Alcala de Henares**
**28807**
**E-28807 Madrid(ES)**
Inventor: **De Sande Moreno, Alfonso**
**Paseo de la Estaçion, 1, Alcala de Henares**
**28807**
**E-28807 Madrid(ES)**

(74) Representative: **Sanchez del Campo Gonzalez**
**de Ubierna, Ramon**
**c/o Ballestero y Cia.S.L. Velàzquez, 87-1.o**
**Dcha**
**E-28006 Madrid(ES)**

(54) **A method for slowing down the metabolism and controlling the ripening of fruits and similar.**

(57) A method for slowing down the basal metabolism and controlling the ripening process of fruits and similar. It consists of dissolving acetic acid in a determined volumen of water, adding a determined amount of potassium permanganate and of sodium periodate, by stirring until dissolving, and adding then powdered sepiolite and after a later stirring, a - paste will be obtained which will be extruded inside an oven. Next, the moisture rate is assessed and the paste is distributed in filter-like sections or unwoven textile material bags.

## OBJECT OF THE INVENTION

This invention relates to a method for slowing down the basal metabolism and controllong the ripening process of fruits and similar, in order to remove the ethylene found in the chambers storing fruits or similar, by acting in ethylene oxidation to $CO_2$ reaction, with better results than the absorbing reagents known up-to-date, by effecting a water vapour emission and other carbonates.

## FIELD OF THE INVENTION

The present invention finds its application in the chemical industry, its final object being to be used by the industries devoted to store - fresh products, in special fruits and similar.

## PRIOR ART

Among the technics used at present to attain the storage of vegetable products, fruits and similar, are known those based on using controlled atmospheres, which decrease the $O_2$ concentration within the chamber, so obtaining a increase of $CO_2$, or avoiding consequently the presence of high ethylene concentrations (1) in the chamber.

As it is kown, the ethylene is emitted in the ripening process of - fruits and vegetables, and it has been shown that the ethylene hastens their ripening so that if the ethylene is not removed from the medium wherein it is, it provokes an overripening of fruits and a fast withering of flowers.

In order to eliminate the ethylene in the fruit or flower storage - chambers, several oxiding systems have been used, and are used, some of which are patented.

Among those known are:
- Potassium bromate, supported on activated carbon (2).
- Silver and aluminium chloride over alumina (3).
- Zeolite interchanged with ions $CU^{2+}$ (4).
- Activated carbon saturated with Cu, Fe, Co or Ni salts (5).
- Palladium chloride supported on carbon (6).
- Sodium chlorite saturated with silica or zeolites (7).
- Permanganates saturated with inorganic supports (8).

Of all them, $KMnO_4$ is the most industrially used for removing ethylene, and its performance in said process relies, in a certain measure, on the type of support used.

For instance:
- Alumina (9),
- Vermiculite (11),
- Mica (1),
- Diatomaceous earth (12),
- and so on.

The use of high specific surface supports allows to saturate the $KMnO_4$ with a high gas/solid contact surface, so increasing the capacity of removing the ethylene, alumina (9 and 10), magnesium aluminate (13), zeolites (14), other aluminosilicates (15) or mixtures (16 and 17) being the most used.

In the Spanish patent applied for under number 2,000,064 (18) and its certificate of addition number 8700899 (18'), the different advantages exhibited by using sepiolite as support for the $KMnO_4$ are shown in order to achieve the removal of the ethylene existing in the fruit preservation chambers, since besides to present a high surface, it emits $CO_2$ to the environment and allows to control the environmental moisture.

With these advantages, united to the low cost of the mentioned natural silicates, it is possible for the use of the $KMnO_4$/sepiolite system to exhibit very interesting perspectives.

In the above-mentioned Spanish patent of invention applied for under number 2,000,064, a method for preparing the absorbing reagent is described, which consists of saturating a permanganate on sepiolite granules having a size on the order between 2 and 4 millimeters.

The saturation is carried out in watery or alcoholic solution, at a temperature beteewn 20º and 150ºC, during a time no higher than twelve hours, a solid being obtained, as a result, having a moisture degree of about 25% by weight.

In said Spanish patent, it is pointed out that the ethylene removing capacity from the medium as regards the $KMnO_4$, which is present in the absorbent, is $KMnO_4$ : molar ethylene % 2:1.

Amongs the most important qualities claimed in the above-mentioned Spanish patent, as applied for under number 2,000,064, it is that states that the $CO_2$ emission favours to obtain an adequate atmosphere

2

inside the fruit preservating chambers.

The concentration of $CO_2$ emitted outside with said product is on the order of 0.5 mole of $CO_2$ per each ethylene mole absorbed.

The main difference between both, i.e. that exhibited under the shape of solid cylinders and that exhibited under the shape of granules, is the ethylene absorbing capacity, as, in accordance with the results obtained with those extruded, the $KMnO_4$ : $C_2H_4$:$CO_2$ ratio passes from 2:1:0.5 at granules to 3.3:1:0.75, according to the following explanation.

When the absorbent is under the shape of granules, its absorbing capacity is:

| $KMnO_4$ present | 3.66 mmole |
|---|---|
| $C_2H_4$ removed | 1.89 mmole |
| $CO_2$ emitted | .91 mmole |

In short, the ratio between the three ones is:

$KMnO_4$:$C_2H_4$:$CO_2$--2:1: .5

Nevertheless, when the absorbent is exhibited as extruded, an absorbent having 5% by weight of $KMnO_4$ is used, the ethylene absorbing capacity of which is 2.67 mg $C_2H_4$/g absor., emitting a $CO_2$ ratio close to 75% with regard to the ethylene removed such as:

- 2.67 mg $C_2H_4$ = .0954 mole $C_2H_4$
- 1 g of absorbent has .05 g of $KMnO_4$ = .316 mmole of $KMnO_4$
- Ratio: $CO_2$:$C_2H_4$ = .75

In short, the ratio between the thre compositions is:

$KMnO_4$:$C_2H_4$ $CO_2$ = 3.3:1:0.75

Lastly, although not mentioned in the above patents, it can be inferred from these results that the ethylene removing capacity and the $CO_2$ absorbing capacity of the $KMnO_4$/sepiolite system depend, among other parameters, on the physical shape of the starting sepiolite and the compaction method used.

As a result of the above, the introduction of possible improvements in the above-mentioned products requires to analyse more deeply the features of the studied system.

In this manner, firstly, the $KMnO_4$, as an ethylene oxidant agent, and the sepiolite, as a support for reactive specimens, properties will be analysed.

Marginally, the effect caused by different parameters on the properties of said support will be studied.

In the first place, the $KMnO_4$ is described as an ethylene oxidant.

The watery solutions of parmanganate are inherently unstable (19).

In an acid medium, its decomposition is slow, but it can be observable as per the equation:

$4\ MnO_4{}^- + 4\ H+ - 3\ O_2\ (g) + 2\ H_2O + 4\ MnO_2\ (s)$

In neutral or slightly alkaline solutions kept in the dark, the decomposition is so slow that it cannot be measured.

Nevertheless, said process is catalized by light, for which it must be always kept in opaque receivers.

In alkaline solutions, the permanganete is a powerful oxidant, as it ban be reduced to $MnO_2$ according to the reaction:

$MnO_4{}^- + H_2 + 3\ e^- - MnO_2\ (s) + 4\ OH^-\ E^o = 1.23\ V$

Its oxidant power is higher in an acid medium, so that, in excess of redoubts, it reduces to $Mn^{2+}$:

$MnO_4{}^- + 8\ H^+ + 5\ e^- - Mn^{2+} + 4\ H_2O\ E^o = 1.51\ V$

When there is a reductors default, the $MnO_4{}^-$ can oxidize the $Mn^{2+}$, giving $MnO_2$ as final product.

$2\ MnO_4{}^- + 3\ Mn^{2+} + 2\ H_2O - 5\ MnO_2\ (s) + 4\ H^+\ E^o = 0.46\ V$

As regards the olefin oxidation, the potassium permanganate diluted in a neutral medium oxidizes the olefins to diols with cis-stereochemistry.

Given the oxidizing nature of the permanganate, it is very difficult to stop the reaction at the diol stage, since the permanganate reacts with glycols to give compositions more oxidized, ketones, carboxy acids or carbon dioxide.

In this manner, in the case of ethylene, its oxidation many pass throu the following stages:

$$CH_2 = CH_2 - CH_2OH-CH_2OH \underline{\quad\quad} CHO-CHO \underline{\quad\quad} COOH-COOH \underline{\quad\quad} 2\ CO_2\ +\ H_2O$$

The global stereochemistry of the process can be according to the acidity of the medium:

a) $\quad 4\ MnO_4^- \ +\ C_2H_4\ +\ 4\ H^+\ -\ 4\ MnO_2\ +\ 2\ CO_2\ +\ H_2O$

or

b) $\quad 12\ MnO_4^- \ +\ 5\ C_2H_4\ +\ 36\ H^+\ -\ 12\ Mn^{2+}\ +\ CO_2\ +\ 28\ H_2O$

If the reaction is carried out in gas phase or in an aprotic solvent, i.e., in an anhydrous medium, the first step of oxidation is the ethylene oxide, $C_2H_4O$, formation.

This ethylene oxide, in the presence of $MnO_4^-$ follows the oxidation process, which can be stopped at a phase or other according to the oxidizing power of the permanganate.

In the case of the $KMnO_4$/sepiolite system, the permanganate ion is absorbed into the sepiolite, forming a superficial complex with water molecules close to it, since, as it is well known, the depiolite is able of absorbing water until 200 = of its weight.

When the ethylene, in the gas phase, interacts with the $MnO_4^-$ absorbed into the support surface, the reactions occurs in the gas/solid interphase.

Therefore, although it cannot be considered that the reaction is to take place in watery solutions, it cannot be also said that it is going to take place in an anhydrous medium, since in the surroundings some water molecules or, more specifically, center acids of Brönsted ($H^+$) can exist.

Bearing in mind the importance of the acidity of the reaction medium over the permanganate oxidizing power, it is considered very important to know and control the support acidity.

When the sepiolite is used as support, and knowing that the sepiolite is a hydratated magnesium silicate, the ideal formula as per Brauner and Preisinger (21) is:

$Si_{12}Mg_8O_{30}(OH)_4(OH_2)_4\ .8H_2O$

Sepiolite has a fibrous structure formed by talc type bands, parallel to the fiber axle, formed by two layers of silica tetrahedrons united by oxygen atom to a center plan of magnesium atom in octahedron coordination.

Due to the alternating position of the nonshared vertexes of the tetrahedrons, their structure presents channels which are orientated in the longitudinal sense of the fiber, which are known as zeolite channels.

The section of these channels, wherein water and other fluids can enter, is 3.6 x 10.6 Å, which confers on the sepiolite properties of unusual microporosity in the field of clays (22).

The overall surface of the sepiolite, as calculated starting from the structural model and bearing in mind the inner surface of the channels, is 800-900 $m^2$/g (23), of which about 500 $m^2$/g correspond to the zeolite channel inner surface, and 400 $m^2$/g correspond to the outer surface.

Like other fibrous ores, it has different water types that it can lose by progressive heating (24).

The types of water contained are the following:
- Hygroscopic water, which is the water absorbed physically in the fiber outside.
- Zeolitic water, which the water absorbed inside the channels.
- Crystallization water, corresponding to water molecules united to the edges of the magnesium octahedral sheets.
- Constitution water, corresponding to the structural $OH^-$ groups from Si-O-Si links transformed into terminal Si-OH.

When sepiolite is subject to thermotreating, important modifications are produced in its crystalline structure.

Rautureau et al. (25) summarize the structural development caused as the different types of water are lost until arriving at an anhydrous sepiolite.

In the above structural development process, between 200º and 400ºC, a drastic decrease of the accessible surface and porosity, as a result of the fiber folding produced because of the rotation of the elemental ore layers, once the crystallization water is lost, is produced.

The structure folding originates the zeolite channel narrowing, so decreasing the access to the inner surface of ore.

Therefore, if it is desired to maintain the microporous structure of, the sepiolite, the treatment temperature must be kept under the folding temperature, 200º C can serve as reference.

In relation to the accessible surface and porosity of the sepiolite, it is known that this has a fibrous structure giving it very specific textural characteristics, since it is provided with a high volume of pores ($Vp$ = .9 cm$^3$ g$^{-1}$), due to the voids of different nature and size.

The pores of larger size or "macropores" ($r$ +/- 500 Å) correspond to spaces comprised between sepiolite particles and they are formed in the agglomeration process.

"Mesopores", having a mean radius between 50 and 500 Å, are due to - voids included among fibers or fiber clusters.

Lastly, "micropores" with a mean radius smaller than 50 Å correspond to intrafibrillar spaces, i.e. intracrystalline or zeolite channels.

The specific surface available for different absorbates depends on the molecular capacity of penetrating into intracrystalline channels.

According to Müller and Koterman (26), the penetration capacity of adsorbates depends mainly on the molecular size; nevertheless, Barrer et al. (27) and Martín Vivaldi (28), among others, maintain that only the polar molecules can penetrate into the channels.

The ratio between the available surface extent and the nature of adsorbate has been assessed by analyzing the differences found in calculating the specific surface of the method pursued.

For instance, if hexane is used, the calculated area is 330 m$^2$/g (29); with pyridine, 275 m$^2$/g (30), and by the B.E.T. method, with $N_2$, 276 m$^2$/g (31).

Nevertheless, by using ethylenglycol, Fenoll and Martín Vivaldi (32) obtain a total of 470 m$^2$/g.

The relatively so lower value obtained with $N_2$, together with the - speedy absorcion of $N_2$ in obtaining the balance (33), suggest that the $N_2$ molecules do not significately penetrate the intracrystalline channels and that the absorcion takes place in the outside surface.

These results confirm the idea explained by Barrer (27) and Martín Vivaldi (28), who point out that the adsorcion in the zeolite channels is restricted to polar substances.

This property shown by sepiolite explains its low $CO_2$ absorcion capacity shown, in spite of the fact that the $KMnO_4$ ratio, as absorbed in the sepiolite is higher than in the most of the used supports.

The surface extent of sepiolite and its porosity can be modified by - means of different types of thermotreatements or by means of acids, or by applicating a high shearing force.

Furthermore, both the temperature at which the structure folding takes place, and the available surface remaining behind this, depend, among - other factors, on the particle size of the starting sepiolite.

In order to enhance the influence of these variables on the sepiolite porosity, an exhaustive analysis of these variables follows.

When sepiolite is heated at temperatures between 100º and 150ºC, the absorbed water is removed, both in the channels and outside the fibers, this causing an increase at the B.E.T. surface.

Studies carried out by analyzing the development of the surface by - the B.E.T. method (with $N_2$), varying the degassing conditions (34 and 35), show that the measured surface increases upon increasing the degassing temperature until a maximun of 360 m$^2$/g, between 100º and 200º C.

If the treatment temperature is higher than 300ºC (160ºC under vacuum) a strong fall in the surface extent and the number of pores having a radius lower than 10 Å is caused.

At 500ºC, the extent decreases appreciably owing to the fiber sinterization which causes a larger packing thereof, so reducing both the volume and the mean radius of pores.

In short, to obtain a sepiolite with the maximun surface extent accesible, it must dry at a temperature lower than that at which the folding takes place, i.e. between 100º and 300º C.

The acid treatment of argillaceous ores is an already typical method of activation causing outstanding changes in its superficial reactivity, as well as in its crystalline structure and texture (36). T. Fernández Álvarez (37), through a treatement with HC1, noticed an increase of the B.E.T. area of sepiolite, which he attributed to an increase of the pore rate of a radius comprised between 10 and 50 Å.

In this manner, T. Fernández Álvarez considers that the treatment with HC1 increases the crystalline channel section, so making easier the entry to same of the sorbate molecules.

On the other side, A. Jimenez López et al. (38) submitted sepiolite to a treatment with $HNO_3$ (a concentration lower to 1N), and heated the specimen at 200ºC.

They noticed that, thanks to said treatment, an increase of volume of pores is produced without changing markedly its relative distribution.

L. González et al. (49) (40) have studied the acid dissolution kinetics of a sepiolite changing the type of acid, its concentratión, the lixiviating process temperature and the temperature at which the sepiolite (41) was treated previously.

According to these authors, the acid nature does not markedly affect the kinetics of the lixiviating process, because, although the $H_2SO_4$ gives arise to hydrolysis rates slightly higher than those obtained with the HCl or $HNO_3$, those of these are very similar each other

On the contrary, the B.E.T. surface of silicas obtained depends very much on the acid nature.

The following table shows the results of specific surface and pore volume, as assessed by different methods, obtained with a natural sepiolite and with the same sepiolite treated with different HC1 acids.

In the nomenclature of the following table, "C" = $HNO_3$; "N" = $HNO_3$; and "S" = $H_2SO_4$.

| Sample | $S_{BET}$ (m/g) | $C_{BET}$ | Vm(cc/g) CNPT | Saum ($m^2$/g) | $p/p_o = .95$ $V_{0.95}$ (cc/g) CNPT |
|---|---|---|---|---|---|
| Sepiolite | 226 | 122 | 52 | 57 | 278 |
| C6AIPT80H1-"C" | 407 | 487 | 93 | 121 | 322 |
| N6T80H24-"N" | 132 | 304 | 30 | 90 | 240 |
| S6780H200-"S" | 80 | 310 | 18 | 63 | 157 |

Folgado M.A. et al. (42 and 43) have studied the kinetics of taking out magnesium from sepiolite by using acetic acid in order to improve the reactivity of the solids, creating active surface groups, and in order to increase its thermic stability, controlling the folding of their structure.

They treated sepiolite with watery dissolutions of acetic acid of different concentrations (pH: 1-5) and analyzed the effect on the sepiolite characteristics.

The results obtained show that the texture corresponding to pores having a radius lower than 500 Å hardly varies.

Now then, a loss of magnesium occurs at the channel mouth making easy the $N_2$ introduction, with the resulting increase in the area measurement available.

In respect to macropores, a treatment with a low pH increases substantially their volume.

So, it can be concluded that the acetic acid acts mainly on the fiber clusters, by disintegrating them and increasing the void volumen between them, but it does not vary markedly the crystalline structure of sepiolite.

The infrared spectroscopy has shown that, through this treatment, the ion acetate joins the sepiolite surface, with the resulting change of surrounding OH groups, and there is an increase of reactivity in front of the anion exchange.

This aspect is very important if an optimization of the $MnO_4^-$ ion saturation in the sepiolite is desired.

In relation to the shearing force and knowing that the elemental particles of sepiolite are found normally grouped forming bundles.

When said particles are adequately suspended on a watery medium, a tridimensional net is formed due to the dispersion at random of particles, the dissolvent molecules being trapped within said net.

Said net is stable due to links forming hydrogen bridges between surface silanol groups and dissolvent molecules (22).

The gels obtained with products derivated from sepiolite show a pseudo-plastic nature, i.e. high viscosity at low shear and low viscosity at high shear.

The reason for this performance can be understood by analyzing their gelification mechanism.

At rest or low shear, the tridimensional net or reticle formed by the particles is constituted as such, providing a high viscosity.

When the shear force is increased, the particles face toward the flow direction, and the so formed net is destroyed and the viscosity drops.

When this force is no longer applied, the net regenerates and the original viscosity is recovered.

Bearing in mind that the gelification is obtained when the particles are perfectly dispersed , the suspension viscosity depends to a great extent on the efficiency of dispersion.

An adequate dispersion is obtained by applicating a relatively intensive shearing work, which, for practical purposes, can be interpreted under two variables:
- Stirring speed with high shear elements.
- Stirring time.

In addition to reological properties, the shearing work can affect the textural properties, particularly the surface area.

Ioka M. and Ooguchi Y. (44), by using Vallecas sepiolite, noted that, upon intensively mixing sepiolite with water and drying then, a product is obtained, the specific surface and void volume of which are markedly higher than those obtained in said treatment.

This porosity increase is due to an increased dispersion of fibers, which, in turn, produces an increased ratio of interfibrillar voids.

As regard the particle size, it should be pointed out in the first place that sepiolite can present itself under two main forms:
- As alpha-sepiolite, to be found under a crystalline fiber bundle shape.
- As beta-sepiolite, to be found under an amorphous aggregate shape.

From the macroscopic point of view, sepiolite can adopt different aspects, such as compact, spongy, fibrous, etc.

According to the US patent 4.266.672 (45), the sepiolite configuration can play an important role on its properties.

A similar conclusion can be drawn by comparing the results of the above-mentioned Spanish patent applied for under number 2.064.000 (18) and its patent of addition number 8700899 (18').

Bearing in mind that the best results were obtained with granules, it seems appropiate to use sepiolite under said physical configuration to saturate the $KHnO_4$.

If it is prepared as extruded cylinders, it is necessary to consider the influence of the starting sepiolite particle size on the properties of the final product.

Such as it happens in the case of the shearing force, the sepiolite particle size affects its porosity, specially the larger size pores, "macropores", that, as it has been previously pointed out, it corresponds to interparticulate voids and they are formed as a result of the agglomeration of adjacent particles in the extruding process.

On the other side, the influence of the particle size can be very important in the saturation and drying stages, since it can affect the distribution of $KMnO_4$ inside the particles.

About the sepiolite acidity, it is known that a very important structural characteristic of same is that its surface is covered by silanol groups (Si-OH), one each five A along the particle edges (24).

The presence of the silanol groups allows,as already mentioned, to lay "H" bridges between the fiber bundles, and, furthermore, they confer an acid character on the sepiolite surface.

Folgado M.A. (42) has measured the acidity of a Tolsa sepiolite, by assessing, by means of the Johnsonn (46) method, the number of acid centers and the strength thereof.

The results obtained show the sepiolite has a noticeable acidity, with acid centers of cKa higher than 2.

As regard the isoelectric point of sepiolite, it has been found that, when two different phases contact and one of them is a polar liquid such as water, its molecules in the interphase tends to be orientated in a given direction and a potential difference between both phases is generated.

If, in one of the phases, there are electrons or ions, these show a trend to be distributed into the interface in a manner non uniform.

In this way, when a watery dissolution is obtained with an oxide particle in suspension, this tends to be polarized and electrically charged at a value depending on its own nature and the pH of the dissolution encircling it (47).

Isoelectric point is defined as "the pH value for which the oxide - surface has a surface charge nil".

From a conceptual point of view, a system is just in the isoelectric point when the sum of concentrations of positive and negative complexes in the interface is compensated.

Its knowledge is a decisive step for realizing salt saturations in dissolutions on solid oxides, since the trend towards absorbing ionic species is a function of the pH of the medium (48).

An oxide particle, dispersed in a solution the pH of which is lower than that of its isoelectric point tends towards be positively polarized and as compensation it absorbs anions.

On the contrary, the same particle dispersed into a solution the pH of which is higher than the isoelectric point, adquires a negative charge on its surface and absorbs cations as a compensatory measure.

Therefore, there are three fundamental factors to consider in a saturation:
a) Isoelectric point of the solid
b) pH of the saturating dissolution

7

c) Charge of ion to be absorbed.

A theory initially developed for oxides can be applied to solids of any type, and it has a great importance in the case of natural silicates with possibilities of an ionic exchange, as the sepiolite.

In conclusion, it can be pointed out that the saturation of anionic complexes to the sepiolite surface must be done by using pH ± 2 solutions.

The influence of this parameter has been analyzed by Lindester et al. in the study of ethylene"adsortion" by the $KMnO_4$/alumina system (49).

Obviously, it should be considered that an evident solution to obtain a method capable of slowing down the ripening or withering of fruits and flowers will be constituted starting from effecting an exhaustive analysis of the $KMnO_4$/sepiolite system properties, as previously carried out, allowing to attain different novelties which can be introduced in any of the different parts of a manufacturing process of product.

Nevertheless, until now the existence of any type of improvements related to the subject matter achieving, in a clear and realible manner, to attain the aim pursued, is unkown.

DOCUMENTARY BIBLIOGRAPHY CITED IN THE PRIOR ART OF THE INVENTION

(1) KNEE M., MATFIELD S.G.Ann.Appl.Biol. 98 (1) 157-65 (1981).

(2) JAP. PATENT 58.98141 (1981).

(3) JAP. PATENT 60.114336 (1985).

(4) EUR. PATENT 147.960 (1985).

(5) GER. OFFEN 2840791 (1979).

(6) JAP. PATENT 81.55147 (1981).

(7) JAP. PATENT 59.39243 (1984).

(8) FR. DEMANDE 2525863 (1982).

(9) SCOTT K.J., GIUGNI J., BAILEY W.Mc.C. Jo.Hortic. Sci. 59 (4) 563-6 (1984).

(10) ESCRICHE A., APARICIO J., MARIN J.G., ARTES F. Frutic.Prof. 15, May-June, 46-52 (1988).

(11) NAGATA K., KURIHARA A., Nog.Oyo.Engey 58, (7) 947-8 (1983).

(12) FR. DEMANDE 2.509.964 (1981) = EUR.PAT. 71.533 (1983).

(13) JAP. PATENT 58.20149 (1981).

(14) JAP.PATENT 61.17461 (1978).

(15) JAP.PATENT 58.220648 (1983).

(16) GER (EAST) DD 225345 (1985).

(17) PAT.ESP. 480.710 (1979).

(18) PAT.ESP. 2000064 (1987).

(18') PAT.ESP. 8700899 (1987).

(19) COTTON F.A., WILKINSON G, "Química Inorgánica Avanzada", Ed. Limusa-Wiley.

(20) ROBERTS J.D., CASERIO M.C.: Basic Principles of Organic Chemistry". Ed. W.A. Benjamin (1965).

(21) BRAUNER K., PREISINGER A. Miner.Petrog.Mitt. 6, 120 (1956).

(22) TEMPRANO F., PÉREZ CASTELLS R. Quim.Ind. 35, (5) 467 (1989).

(23) SERNA C., VANSCOYOC G.E,, Proc.Inter.Clay Conf.Londres (1978).

(24) ALVAREZ A. "Paligorskyte-Sepiolite. Occurrences, Genesis and Uses", p. 253-287. Ed. Elsevier (Amsterdam).

(25) RAUTUREAU M., MIFSUD D. Clay Minerals 12, 309 (1977).

(26) MULLER K.P., KOLTERMAN M. Z.AnorgAllgem.Chem. 341, 36-40 (1965).

(27) BARRER B.M., MacKENZIE N. J.Phys.Chem. 58, 560 - 567 (1954).

(28) MARTIN VIVALDI J.L., CANO RUIZ J., MARTIN VIVALDI V. IX Reun. Bienal R.S.E.F. y Q. (1958).

(29) ROBERTSON R.A.S. ChemInd. (N.Y.) 1492-5 (1957).

(30) RUIZ-HITZKY E., CASAL B., SERRATOSA J.M. 5th Meet.Eur.Clay Groups, Praga (1983).

(31) RUIZ-HITZKY E. Tesis Doct. Univ. Lovaina

(32) FENOLL P., MARTIN VIVALDI J.L. Anal. Quim 64, 77-82 (1968).

(33) BARRER B.M., MacKENZIE N., MacLEOD D.M. J.Phys.Chem 58, 568-572 (1954).

(34) FERNANDEZ ALVAREZ T. Bol.Soc.Esp.Cer.Vid. 9, 377-394 (1970).

(35) FERNANDEZ ALVAREZ T. Clay Min. 13, 325-335 (1978).

(36) ROSS G.J. Canadian J. Chem 45, 3031 (1967).

(37) FERNANDEZ ALVAREZ T. Bol.Soc.Esp.Cer.Vid. 11, 365-374 (1972).

(38) JIMENEZ LOPEZ A., LOPEZ GONZALEZ J.D., RAMIREZ-SAEZ A., RODRIGUEZ REINOSO F., VALENZUELA C., ZURITA L. Clay Min. 13, 375-386 (1978).

(39) GONZALEZ HERNANDEZ L., IBARRA L., RODRIGUEZ DIAZ A., CHAMORRO C.J. Colloid Interf.Scien. 109, (1) 150-160 (1986).

(40) GONZALEZ HERNANDEZ L., IBARRA L., RODRIGUEZ DIAZ A., CHAMORRO C. Anal.Quim 81, 27-33 (1985).

(41) GONZALEZ HERNANDEZ L., IBARRA L., CHAMORRO C. Anal. Quim. 83 157-161 (1987).

(42) FOLGADO M.A. Tesina Univ.Compl.Madrid (1986).

(43) FOLGADO M.A., MENDIOROZ S. VI Reun.Iber.Adsorc. (1986).

(44) JAP. PATENT 76.13018 (1976).

(45) US. PATENT 4.266.672.

(46) JOHNSON O. J.Phus.Chem. 59, 827 (1955).

(47) PARKS G.A. Chem.Reviem. 65, 177-198 (1965).

(48) BRUNELLE J.P., SUGIER A. Comp.Rend.Acad.Sc.Paris 276 (1973).

(49) LINDSTER P., LAWRENCE R.A. Hort.Science 18 (4) 615 (1983).

(50) Handbook Chem. and Phys. B-119 Ed.C.R.V. Press.

(51) BRESLOW R. "Mecanismos de reacciones orgánicas" Ed. Reverte.

## DESCRIPTION OF THE INVENTION

The method for slowing down the basal metabolism and controlling the ripening process of fruits and similar proposed by the invention constituted by itself a solution that, obviously, increases the existing possibilities in this matter at present.

In a more definite manner, the method for slowing down the basal metabolism and controlling the ripening process of fruits and similar is constituted starting from a treatment prior to the sepiolite in order to attain an absorbent improvement, which is constituted within the selection of the more adequate type of sepiolite for carrying out the process.

As it is known, by using granular sepiolite, results higher than those obtained from the utilization of extruded sepiolite are obtained, - without forgetting that it is necessary to bear in mind the fact that the performance of these latter can be improved through different methods, by posponing the selection to the obtaining the results of the corresponding tests,

Unquestionably, in the method which is the object of the present invention, the particle size acquires a virtual importance, as if used as granules, the size of same and their porosity will affect on one side the simplicity of saturating uniformly the permanganate in the solid, and on the other side the easiness to accede the ethylene in the particle where the permanganate is.

If the sepiolite is prepared as extruded sepiolite, the porosity of the final product, i.e. the surface area, volume of pores and their distribution, depends on the starting sepiolite particle size, since the mixing phase affects the easiness to obtain a good dispersal of fibers and subsequently, in the extruding phase, it influences on the final mechanical strength.

Consequently, it is proposed to prepare four samples in which the only difference among them is the particle size, these mixtures being able to be prepared with the following types of sepiolite.

FIRST. Sepiolite 6/15. Particle size: $2^+$ 4 millimeter.

SECOND. Sepiolite 60/120. Particle size: $0.12^+$ 0.25 millimeter.

THIRD. Sepiolite 60 NF. Particle size: 0.25 millimeter.

FOURTH. Sepiolite 120 NF. Particle size: 0.125 millimeter.

The first one should be tested as granular sepiolite and the other three as extruded sepiolite.

Upon increasing the stirring speed or time of a sepiolite mass with water, an increased dispersion of its fibers is caused, which leads to an increase of the active surface and the void volume, so improving the absorbing properties of sepiolite.

Therefore, it is convenient to increase the mixing time or speed to improve the properties of the final product.

It is very easy to check the analysis of effect of this variable, by preparing a series of samples in which the stirring time is varied prior to the extruding phase.

The previous treatment of sepiolite with acetic acid causes the partial dissolution of the magnesium oxide by generating voids in the sepiolite structure.

This process of a previous treatment of sepiolite with acetic acid leads to an increase of the $SiO_2:MgO$ ratio and an increase of porosity of same.

Out of the different acids used, the most attractive for obtaining the purpose pursued in this study is, seemingly, the acetic acid, as according to the exhaustive study on the prior arte, attached to this specification, said acid does not markedly change the crystalline structure of sepiolite but it simply splits the fibergrouping, so increasing the number of voids among them, and dissolves the Mg located at the pores opening, increasing their accessibility both for the $-MnO_4^-$ saturation and for the later ethylene saturation and reaction with it.

On the other side, from a chemical point of view, the increase of the surface acidity due to the acid treatment must increase the permanganate oxidizing power and, therefore, to improve the sample capability to remove ethylene.

In regard to the mode and moment for carrying out the acid treatment, it is important to note that the mixing process with water is not necessary after the acid treatment, but it can be carried out before this or even at the same time.

The permanganate saturation in sepiolite must be done with a pH dissolution lower than that of its isoelectric point, i.e., $pH^+2$, since said medium helps the absortion, in the surface, of anionic species such as the $MnO_4^-$.

In respect to the concentration and dissolution volume of permanganate in the same to be used in the saturating procedure, the former is to be fixed bearing in mind the volume of water which is necessary to obtain an extrudable mass without the need of partially evaporating the sample.

This condition is aproximately complied with when the sepiolite/water ratio is close to one.

The permanganate concentration in the impregnating solution used in the patents as mentioned in the prior art of the invention, was assessed by the solubility of $KMnO_4$ in water.

Bearing in mind that said salt is very soluble in acetic acid (50), the use of a watery solution of said acid in the saturating process will allow to change the $KMnO_4$ concentration in a top range and to try to obtain products having a higher $MnO_4^-$ percentage and having higher acidity, definitively with a greater oxidizant power to remove the ethylene.

Therefore, to optimize the saturation process, it is necessary to analyse the influence of the acetic acid concentration on same, by varying the pH between 1 and 5, and the $KMnO_4$ concentration between 2 and 10% by weight in the final product.

As for the mode of carrying out the saturation according to the above-mentioned method, a high percentage of area of the sepiolite accessible to reactants is due to the outer surface of fibers.

Through a strong stirring (high shearing force), a good fiber dispersal can be obtained and to get the maximum contact surface.

If the saturation is carried out when the fibers are scattered, it is probable that de $MnO_4^-$ absortion capacity by sepiolite will be higher, and, therefore, the final product effectivity increases.

That is to say, another parameter the influence of which must be pondered at the moment and way of mixing sepiolite with a $KMnO_4$ acid solution.

At this point, it is necessary to bear in mind that when plunging certain types of sepiolite in an acid medium, sepiolite may considerably swell up and this would impede the saturation.

On the other side, if the sepiolite saturation is carried out with granular sepiolite, it is necessary to control the saturation time in order to obtain a good $KMnO_4$ scattering in the particle. To attain an extrusion, this is to be carried out once the sepiolite is mixed and with the $KMnO_4$ saturated. If not as granular, it must be subjected to the extrusion process in order to shape the product.

Although it is possible to prepare firstly the sepiolite cylinders and then saturate the $KMnO_4$, this option assumes to carry out twice the drying process, this operation making more expensive the manufacturing process, and this is not very advisable "a priori". Nevertheless, it seems neither unadvisable to discard said possibility if considerable delays of the sepiolite properties are obtained, with some of the above-mentioned treatments "acid, mixed, etc., etc.".

About the extrusion pressure, it is necessary to bear in mind that when a mass is subject to a moulding or extrusion process, the fiber bundles agglomerate as a result of the pressure, and the void volumen among fibers decreases.

The increase of the extruding pressure provokes a decrease in the pore volume affecting manly the pores having a radius between 500 an 5000 Å, and it can markedly affect the properties of the final product, for which the extrusion pressure is to be controlled so that a possible maximum porosity is obtained, with an adequate mechanical strength of the solid.

Upon physically shaping the ceramic compounds by means of extruding processes, it is advisable to use moulding aids to give the solids a high mechanical resistence (44).

These aids can be either inorganic, such as silica or alumina, or organic, such as the starch or the polyvinyl alcohol.

The ratio of added moulding agent depends on the substance type, but it would be on the order of 1 and 20% by weigth.

In the case of sepiolite, given its reological properties and its easiness to gelify, this type of additives is not usually necessary for obtaining a correct agglomeration.

Nevertheless, it must not be discarded the possibility of adding an organic agent to the mixing cover,to decompose easily when it is thermically treated, since upon decomposing and leaving the solid mass, it can change the textural characteristics of sepiolite, increasing the pore volume.

However, the selection of the moulding agent must be done bearing in mind that its total decomposition is to be attained at a temperature lesser than 300ºC, as at higher temperatures the folding of sepiolite fibers occurs and the issue would be a specific surface decrease.

In synthesis, the method consists of carrying out the dissolution of a fixed volume of acetic acid in a equally fixed volume of water in order to make easy the dissolution of permanganate and periodate, in order to increase the oxidizing power.

Later, one throu four kg of potassium permanganate and one throu ten kg of sodium periodate will be added, stirring this mixture until obtaining the total dissolution of salts.

To this solution, 100 kg of powder sepiolite will be added, this product, as it is known, being designated as magnesium silicate.

Subsequently, the solution will be vigorously stirred until homogenize the mixture, so obtaining a paste to be finally extruded.

The extrusion of the paste will have a 2-3 mm outlet.

Next, the product will be incorporated inside an oven to be dried, the drying process being carried out at a temperature between 50º and 100ºC for a period of time between one and four hours.

Later on, the trays containing the dry solid will be weighed, the moisture rate being assessed which, finally, will be fixed between 8 and 12%.

Once the cylinders have been dried, they will be cut in lengths of 3-5 millimeters and packed in opaque containers, which can be filters of 1 - 1.5 m length, or weights between 1 and 2 kg.

The product can also be packed in bags of 8-12 g capacity.

The material used for packing the product in a bag will be of polyethylene fiber centrifugation.

It will be a harmless product having a high moisture resistance and a high physical deformation resistance, and being typically used in the field of manufacture of disposable sterile products and pharmaceuticals.

The final result of this method will be marketed packed in bags of high moisture resistance and resistant to possible physical changes. so combining all the conditions required by the rules of packing and packaging foods.

It should be pointed out that the material used for the bags containing the product corresponds to a nonwoven fabric, and because of the addition of sodium periodate there are not subsequent stains.

In short, it can be plainly said that it is a question of a catalyst attaining in a manner reliable the aim pursued, which is packed in a bag made of a nonwoven fabric or introduced in a filter when it is a question of applying the product to a chamber of adequate dimensions, while the product will be distributed in small size bags when it is introduced in boxes.

Lastly, it should be point out in a restricted sens that from the tests carried out, it has been found that the above described method makes firm the possibility of using an element that surpasses a lot the different elements used until now to attain in a manner or other the aim pursued.

It is not considered necessary to make more extensive this description for any expert person in the art to understand the scope of the invention and the advantages derived from it.

The materials, shape, size and arrangement of the elements are open to change whenever this does not mean to modify the essence of the invention.

The terms on basis of which this specification has been described should be always taken in a wide and non limitative sens.


**Claims**

1. A method for slowing down the basal metabolism and controlling the ripening process of fruits and similar intended to remove the ethylene found in the fruit and similar storage chambers, as well as in the boxes or cases transporting these products, by acting in the reaction of oxidizing ethylene to $CO_2$, **characterized** because it is - constituted from dissolving a fixed volume of acetic acid in a predeterminate volume of water, next adding from one to four kg of potassium permanganate and from one to ten kg of sodium periodate.

2. A method for slowing down the basal metabolism and controlling the ripening process of fruits and similar, according to claim 1, **characterized** because, subsequently, the mixture will be stirred until obtaining the total dissolution of salts, then adding 100 kg of - magnesium silicate.

3. A method for slowing down the basal metabolismo and controlling the ripening process of fruits and similar, according to the previous claims, **characterized** because once the dissolution of the product context has been obtained, it will be stirred exhaustively until homogenizing the paste, which will be later extruded with 2-3 millimemeter outlet.

4. A method for slowing down the basal metabolismo and controlling the ripening process of fruits and similar, according to the previous claims, **characterized,** because once extruded, the paste will be submitted to a drying operation within an oven at a temperature between 50º and 100ºC, for a period of time between one and four hours.

5. A method for slowing down the basal metabolism and controlling the ripening process of fruits and similar, according to the previous claims, **characterized** because, once the paste has been removed from the oven, the trays with outlet will be dry weighed, and the moisture rate will be assessed, which sould be fixed between 8 and 12%.

6. A method for slowing down the basal metabolism and controllig the ripening process of fruits and similat, according to the previous claims, **characterized** because once the so obtained cylinders are dried, they will be cut in lengths-of 3-5 millimeter, and next they will be packed in opaque receivers, having a shape of filters of a length of 1 throu 1.5 meter, or a shape of weights between one and two kg.

7. A method for slowing down the basal metabolism and controlling the ripening process of fruits and similar, according to the previous claims, **characterized** because the obtained cylinders can be packed also in bags of an adequate size having a capacity of 8 throu 12 g, which will be fabricated starting from a fixed textile material, - such as a nonwoven fabric.